# EUROPEAN PATENT APPLICATION

(11) **EP 1 965 562 A2**
(43) Date of publication of application: **03.09.2008**
(21) Application number: 08006276.3
(22) Date of filing: 09.05.2003
(51) Int. Cl.: H04L 29/06

(54) **Connection of next generation mobile nodes across previous generation networks to next generation networks**

(30) Priority: 25.06.2002 US 183188
(62) Divisional of application: 03724517.2
(71) Applicant: Intel Corporation, Santa Clara, CA 95052 (US)
(72) Inventor: Liu, Changwen, Portland, OR 97229 (US)
(74) Representative: Beresford, Keith Denis Lewis

(57) **Abstract**

A method for allowing next generation mobile nodes to continue utilizing next generation mobility services when they roam into previous generation domains and communicate across previous generation networks with the next generation networks. The mobile node discovers previous generation mobile agents, obtains a previous generation care-of address for the mobile node from the mobile agents, registers with the previous generation home agent and optionally obtain a previous generation home address, creates an intergeneration pseudo interface and uses it to transmit all the signalling and data packets between a mobile node and its next generation home agent.

## Description

### BACKGROUND

Network protocols set out a specified format and signaling procedures for devices to communicate. Examples include Internet Protocol, and the often simultaneously employed Transmission Control Protocol, HyperText Transmission Protocol, among many others. As a new version of a protocol is deployed, there may be problems with compatibility between the new protocol version and the previous version.

For example, most Internet domains and sites currently use Internet Protocol version 4 (IPv4). However, some sites and domains are migrating to Internet Protocol version 6 (IPv6), sometimes also referred to as Internet Protocol Next Generation (IPng). IPv6 is not compatible with IPv4. The use of IPv6 provides a different addressing structure that allows for more addresses to be used, as IPv4 may 'run out' of available addresses. While the new addressing structure has more available addresses, the change of address structure contributes to the incompatibility between IPv6 and IPv4.

This type of incompatibility has a large impact on mobile users. Mobile users employing the newer version of the protocol but being capable of both versions may roam into an area in which the only available connections are of the older version. This limits the users from being able to communicate in the new version with the network. For example, a user having a mobile device that is IPv6 capable may roam into an area that is IPv4 capable only and may lose the ability to communicate in IPv6.

### BRIEF DESCRIPTION OF THE DRAWINGS

Embodiments of the invention may be best understood by reading the disclosure with reference to the drawings, wherein:
Figure 1 shows an embodiment of a mobile node using a new protocol version roaming into a domain using an old protocol version.
Figure 2 shows a flowchart of an embodiment of a method to allow next generation nodes to communicate across previous generation networks.
Figure 3 shows an embodiment of a degenerated intergeneration site.
Figure 4 shows a graphic representation of a packet transmission between a mobile node and its home agent.
Figure 5 shows an embodiment of a mobile device that may function as a mobile node.

### DETAILED DESCRIPTION OF THE EMBODIMENTS

Current network protocols, such as the Internet Protocol version 4 and version 6, route packets of data to a destination according to its network address. Generally, these addresses are associated with a fixed network location. In mobile networking, the mobile device may change the point of attachment to the network, or address, while communicating with other network nodes. Having to obtain a new network address and switch application communication sessions to the new address every time the device moves to a different point of attachment makes truly mobile networking impractical.

In order to assist in understanding the invention, several illustrations and examples from Internet Protocol (IP or IPv4) networks will be used. During this description, examples of the Internet Protocol will be used to assist in understanding embodiments of the invention. However, there is no limitation to the applicability of the embodiments of the invention. They may be applied to IPv6 and other networking upgrades that result in incompatibilities.

In discussion of examples, there may be references to papers of the Internet Engineering Task Force. Individuals or teams may submit drafts to the various working groups of the IETF, which are available to the public but are works in progress. These are referred to as Internet-Drafts. If the drafts are being considered for standards, they are published as Requests For Comments (RFCs) with an identifying number. For example, Mobile Internet Protocol version 4 (Mobile IP) is discussed in RFC 3220 "IP Mobility Support for IPv4," RFC 2794, and RFC 3024. Other related documents include Internet Draft "Mobility Support in IPv6," and "IPv6 over Mobile IPv4", which are discussing Mobile Internet Protocol version 6 (Mobile IPv6)..

In Mobile IP, the need to have a fixed address for the mobile device's destination is overcome using a combination of a home address and a care-of address. A home address is an IP address that is assigned to a mobile node. It remains unchanged regardless of where the node is attached to the Internet. When a mobile node is at 'home' it is attached to the link at its home network, where the home network is a network having a network prefix matching the prefix of the mobile node's home address. A router resident on the mobile node's home network that tunnels packets for delivery to the mobile node when it is away from home is referred to as a home agent (HA).

A care-of address (CoA) is the termination point of a tunnel towards a mobile node, for packets to be forwarded to the mobile node when it is away from home. CoAs are generally one of two different types. A foreign agent (FA) CoA is an address of a foreign agent with which the mobile node is registered. A co-located CoA is an externally obtained local address with which the mobile node has associated with one of its own network interfaces. A foreign agent (FA) is a router or other network device on a network the mobile node is 'visiting,' or any network that does not have the same network prefix as the mobile node's home address. The FA provides routing services to the registered mobile node. For data transfers originating from the mobile node, the foreign agent may serve as the default router for the registered mobile nodes.

In a typical situation, a mobile node roams inside its own network. While inside its home network, it does not require mobility services, such as a CoA. Once the mobile node roams outside its home network, however, it will require mobility services, including a CoA. Generally, a mobile node determines that it is outside its home network when it receives an agent advertisement from a local agent that indicates that the agent is on a network other than the mobile node's home network. Agent advertisements are a variation of router advertisements, which are used in the Internet communication structure to notify data-transmitting devices of a router's availability.

Upon receiving an agent advertisement that indicates that the mobile node is away from home, the mobile node will obtain a CoA. The CoA will be obtained from the router advertisements from mobility agents, which are usually foreign agents supplying mobility services. The CoA can also be obtained by other means such as DHCP (dynamic host configuration protocol) or manual configuration. Once the mobile node has obtained a CoA, it registers the CoA with its home agent, thereby notifying the home agent of the forwarding address. Once the home address is registered, the home agent will intercept packets destined to mobile node's home address and forward the packets to the mobile node's CoA address, typically by tunneling the packets to the CoA.

In tunneling, the home agent inserts a new tunnel header in front of the packet, in addition to any existing headers, such as an IP header. The new tunnel header uses the mobile node's CoA as the destination address. In some protocols, such as IP-within-IP, the entire original IP header is preserved as part of the tunnel packets payload data.

However, the above discussions assume that the mobile node, all of the intermediate agents, and the network all use the same protocol version. With the introduction of a next generation protocol that is incompatible with the previous generation protocol, these processes break down and no longer work. A mobile node using the next generation protocol cannot communicate if it roams to a point of attachment that requires communication across a previous generation network.

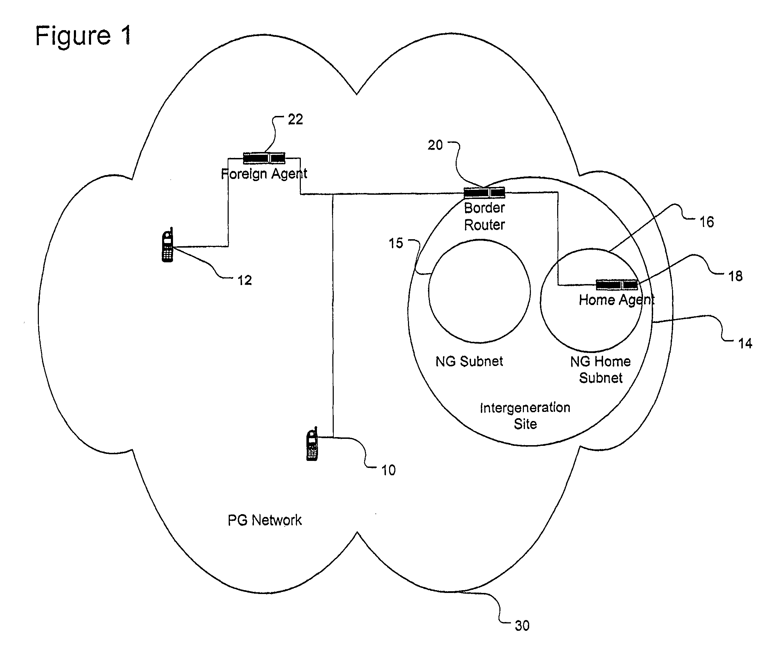

An example of such a situation is shown in Figure 1. Mobile nodes 10 and 12 have roamed outside their next generation (NG) network 14. Their NG network site 14 is what will be referred to as an intergeneration site, a type of NG network during transition period. The intergeneration site 14 have multiple NG subnets, with 15 and 16 being two of them. It is the subnet 16 that is the home subnet for mobile nodes 10 and 12. The intergeneration site in the IPv4/IPv6 example is referred to as a '6to4' site.

The specification of the home network 14 as an intergeneration site means that the NG site is running the NG protocol using intergeneration addresses, and contains at least one intergeneration host (not shown) and one intergeneration router, such as border router 20. The intergeneration address is an address that is constructed using the NG protocol with an intergeneration prefix. The border router, or intergeneration router, is a NG router that supports an intergeneration pseudo-interface. An intergeneration pseudo-interface is the point at which the NG packets are encapsulated inside PG packets or decapsulated from PG packets, typically logically equivalent to a NG interface with the link layer being a PG network. In addition to the intergeneration addresses, the NG site may simultaneously run other NG address types, such as native NG prefixes.

In the specific example, the intergeneration router 20 would be referred to as a '6to4' router, and the home network 14 would be a 6to4 site. The two subnets 15 and 16 would be two IPv6 subnets, and the home agent would be an IPv6 router. The network 30 would be an IPv4 network, the foreign agent 22 would be a Mobile IPv4 agent, and the two mobile nodes would be IPv6 mobile nodes that are Mobile IPv4 capable.

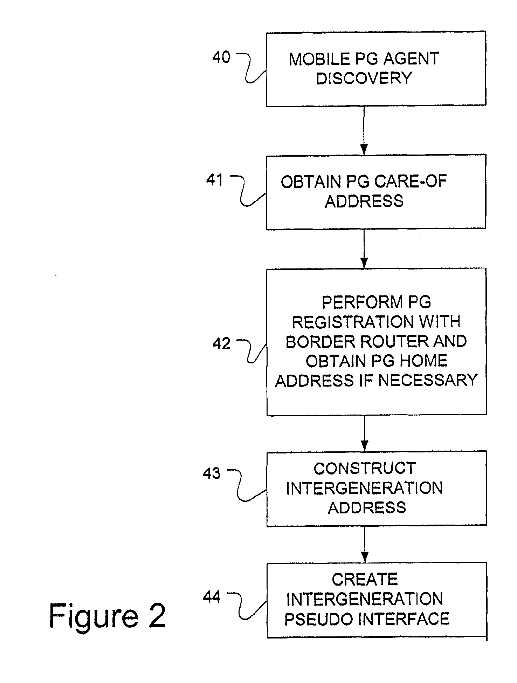

It is possible to utilize the capabilities of an intergeneration site with its related intergeneration equipment to allow a NG mobile node from this intergeneration site to continue to communicate even if it roams into an area where the only connectivity is through a PG network. An embodiment of a method to allow next generation nodes to communicate across previous generation networks is shown in flowchart form in Figure 2.

When a mobile node detects that it has roamed into the PG area, it first performs the mobility agent discovery process discussed above, under the PG protocol at 40. From the discovered mobility agents, such as the foreign agent 22 of Figure 1, the mobile node obtains its PG CoA at 41. The PG CoA allows the mobile node to communicate between itself and its PG home agent, which is the border router.

The mobile node can now register its PG CoA at 42 with the PG home agent. If initially it does not have a PG home address, it must also get the PG home address from the border router with the registration at 42. As will become clearer later, the border router 20 of Figure 1 will act as the PG home agent for the mobile node and is able to assign a PG home address to the mobile node.

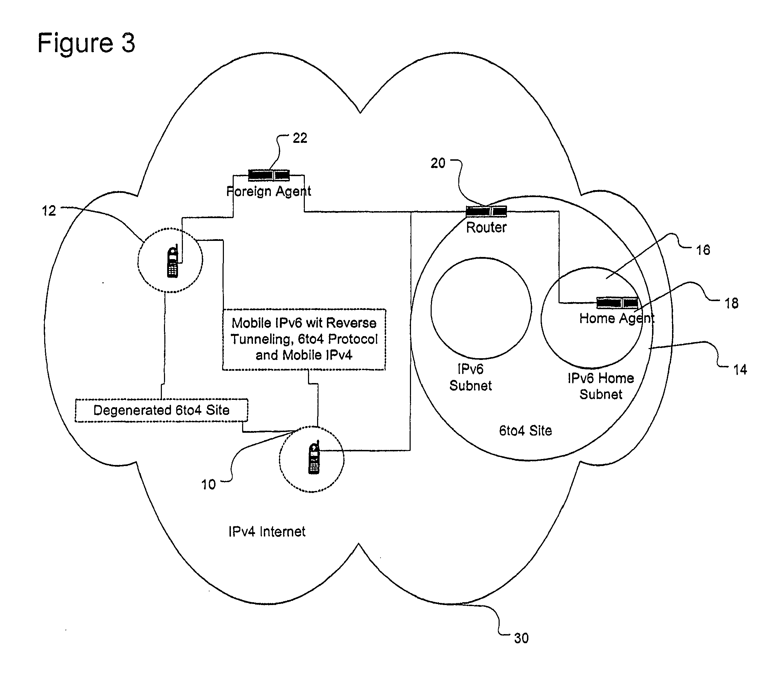

The mobile node then constructs an intergeneration address at 43. This is the NG CoA of the mobile node using an intergeneration prefix of its PG home address. At 44, the mobile node creates an intergeneration pseudo-interface based upon the PG home address. Essentially, the mobile node constructs itself as a degenerated intergeneration site. The site is 'degenerated' in that it consists of the mobile node itself acting as both an intergeneration host and an intergeneration Router. This will be discussed in more detail with regard to Figure 3.

The node also updates its intergeneration address derived from the PG home address, if not already updated or if its registration time has expired, with its NG home agent. When the node moves from one PG domain to another, it does not have to perform a NG binding update unless its previous NG binding has expired. A NG binding is the mobile node's NG home address, NG CoA and the binding update lifetime, or how long mobility agents can use the binding. Once the node is registered/updated in both PG and NG, NG packets into and out of the mobile node can be transmitted. If the node roams back into a NG domain, whether or not it is its home network, the node follows NG protocols for binding updates, except that it should not send any binding updates to establish forwarding from the intergeneration CoA derived from its PG home address.

As can be seen in Figure 3, the mobile nodes 10 and 12 are now functioning as isolated intergeneration sites. They send and receive NG packets encapsulated inside PG headers, using its PG home address as well as the PG CoA. The PG network 'sees' the packets being received and sent from the border router 20. In actuality, the packets are being sent and received from the NG home agent 18, through the border router. However, the PG encapsulation allows the NG packets to be transmitted with no loss of communications.

Using the example of the IP environment, the process would be for the mobile nodes 10 and 12 to obtain or pre-configure IPv4 addresses from a pool of addresses managed by the border router 20 and then use these as their IPv4 home addresses. The mobile nodes would then construct a 6to4 address using their IPv4 home addresses and create corresponding 6to4 pseudo-interfaces. Once the 6to4 pseudo-interfaces are constructed, the mobile nodes then perform Mobile IPv6 with their NG home agent. After that, the mobile nodes 10 and 12 starts to exchange the IPv6 data traffic with their NG home agent.

Some modifications may have to be made to the border routers to allow this process to occur. For example, the intergeneration router manages a pool of PG addresses that may be globally non-routable due to address depletion and the router must act as the mobile PG home agent for the address pool. Furthermore, mobile nodes in the PG domain should not use their PG addresses to initiate application communication sessions. These modifications allow the transmission of packets to occur between a NG mobile node and its NG home agent across a PG network.

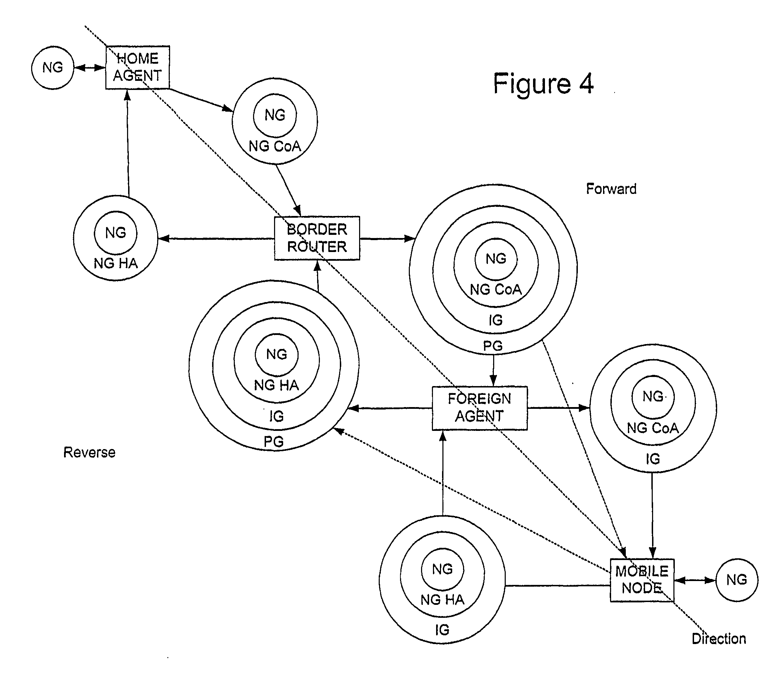

Packets transmitted towards the mobile node will be referred to as the forward direction, and packets transmitted from the mobile node will be referred to as the reverse direction. A graphic representation of one embodiment of packet transmissions is shown in Figure 4.

The NG home agent receives a data packet in accordance with the next generation protocol (NG). It encapsulates it in accordance with the next generation mobility (Mobile NG) protocol with the mobile node's intergeneration CoA. This is then sent, via the NG site internal routing mechanisms to the border router. The border router then encapsulates the packet in accordance with both the intergeneration protocol (IG) and the previous generation (PG) mobility protocol (Mobile PG). This is then routing across the PG network to either the foreign agent, if a foreign agent CoA is used, or directly to the mobile node, if a co-located CoA is used.

If a foreign agent CoA is used, the foreign agent then decapsulates the outmost PG encapsulation and forwards the IG encapsulated packet to the mobile node. The mobile node performs two additional layers of decapsulations to obtain the original NG packet. If a co-located CoA is used, the mobile node performs all three layers of decapsulation to obtain the original NG packet. This is termed the forward direction and is shown as being above the direction line in the figure.

The reverse direction is shown below the direction line. The mobile node encapsulates the NG packet, either with the Mobile NG reverse tunneling, the intergeneration protocol (IG), and the Mobile PG reverse tunneling, if no foreign agent is used, or just with the first two. If no foreign agent was used, the mobile node sends the packet directly to the border router. Otherwise, the mobile node sends the packet to the foreign agent, which then applies the PG encapsulation for reverse tunneling. Optionally, both FA and the mobile node may leave out the Mobile PG reverse tunneling. The border router then decapsulates either the first two layers of encapsulation, or just one if Mobile PG reverse tunneling is not applied and transmits the packet to the NG home agent. The home agent removes the Mobile NG encapsulation to obtain the original NG data packet.

Routing optimization for Mobile NG must be disregarded. For example, Mobile IPv6 offers routing optimization. However, when the nodes are in IPv4 domains, the routing optimization is disregarded because the IPv4 home addresses are usually private and the IPv6 packet encapsulated by the IPv4 home address cannot typically be routed across the global IPv4 towards the mobile nodes.

In this manner, mobile nodes of a next generation network site can communicate across the previous generation network with other NG nodes, mobile or not. This allows newer NG network to be propagated gradually a site a time without requiring the newer protocol to be deployed everywhere and any changes to deployed Mobile PG infrastructure.

In a prior art approach used in the IP realm, documented in Internet Draft "IPv6 over Mobile IPv4," specifies a Mobile IPv4 extension that may be used to negotiate an IPv6 address from the Mobile IPv4 home agent. This turns the Mobile IPv4 mobile agent into the first hop IPv6 router for the mobile node. However, it requires that the first 64-bit prefix of each mobile node IPv6 address be the same as that of one of the Mobile IPv4 home agent Interfaces. This does not work for IPv6 sites with multiple subnets.

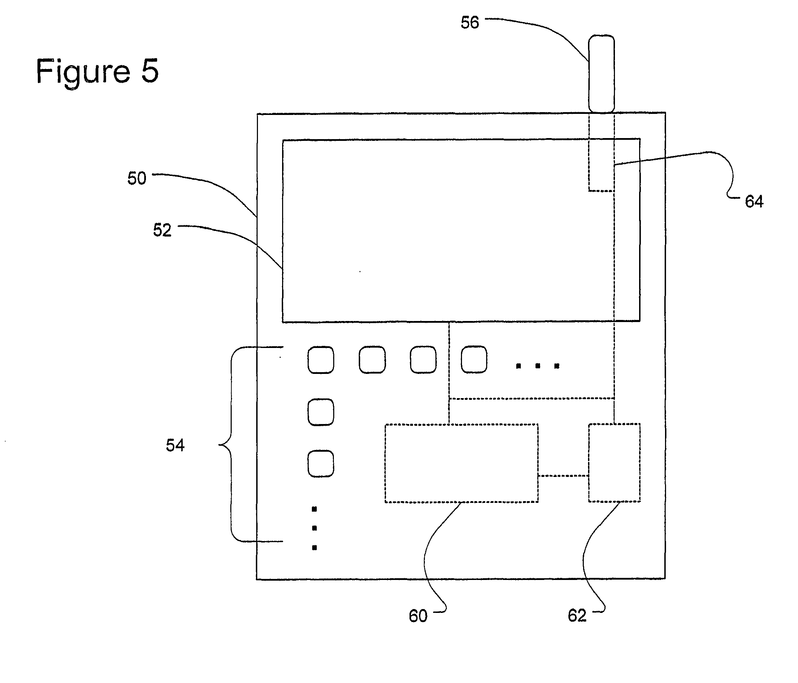

The embodiments of the invention may be directed to a device that can function as a mobile node, or may be implemented by an article of machine-readable code. Figure 5 shows an embodiment of a mobile device that may function as a mobile node. Externally, the device 50 may have a user interface 52, such as a display, and control buttons such as a keypad or keyboard 54. The device may also have either wireless link, such as an antenna, a cable or other type of connector 56 that allows connection to a network. The mobile device may be a cellular phone, a portable computer such as a palmtop computer, a notebook or laptop computer, or a network appliance, as examples.

Internally, the device may have a memory 62 to store the previous and next generation home addresses. As discussed previously, the device may already have a predetermined PG home address. Alternatively, the memory would store the previous generation home address when it is obtained through the communications port 64. The memory may be any type of storage, such as a dynamic random access memory (DRAM), a static RAM, and a storage register resident on the processor 60, among many other options.

The processor 60 is to obtain the previous generation care-of address. In accordance with one embodiment of the invention, the processor would first obtain a previous generation care-of address from the mobility agent. The processor would then constructs an intergeneration address using the previous generation home address from the memory. The processor would then create an intergeneration pseudo-interface using the intergeneration address and use that pseudo-interface to establish communications with a NG mobility agent. It is possible that the processor may also be upgraded with software, in the form of machine-readable code on an article, to perform these tasks.

The article contains machine-readable code that, when executed, causes the machine to perform the processes and methods of embodiments of the invention. The article may be a diskette, compact disc, hard drive or other type of storage upon which are stored the instructions. The device may be one of a various configuration of personal computer; such as a desktop computer, a palmtop computer, or a notebook, or a network appliance, cellular phone, among many other options.

Thus, although there has been described to this point a particular embodiment for a mobile node and a method of connecting next generation mobile nodes using previous generation networks, it is not intended that such specific references be considered as limitations upon the scope of this invention except in-so-far as set forth in the following claims.

The invention is further described by means of the following numbered clauses.

### CLAUSES

1. A method for allowing next generation mobile nodes to communicate across previous generation networks, the method comprising:
   discovering a previous generation mobile agent;
   obtaining a previous generation care-of address for the mobile node;
   constructing an intergeneration address from a previous generation home address assigned to the mobile node; and
   creating an intergeneration pseudo interface.
2. The method of clause 1, wherein the method further comprises determining if the mobile node has a previous generation home address.
3. The method of clause 2, wherein the method further comprises obtaining a previous generation home address.
4. The method of clause 1, wherein the method further comprises performing care-of address registration between the mobile node and a previous generation home agent in its next generation home network.
5. The method of clause 1, wherein the method further comprises performing a binding update between the mobile node and a next generation home agent in its next generation home network.
6. The method of clause 4, wherein the registration is between the mobile node and a border router on the home site.
7. The method of clause 1, wherein the method further comprises establishing a reverse tunnel between the mobile node and a next generation home agent.
8. The method of clause 6, wherein routing optimization is disregarded for the reverse tunnel in the next generation mobility protocol.
9. The method of clause 1, wherein the previous generation care-of address further comprises a foreign agent care-of address.
10. The method of clause 1, wherein the previous generation care-of address further comprises a co-located care-of address.
11. The method of clause 1 wherein the next generation is Internet Protocol version 6, the previous generation is Internet Protocol version 4, and the intergeneration is 6to4.
12. An article of machine-readable code that, when executed, cause the machine to:
   discover previous generation mobile agents;
   obtain a previous generation care-of address for the mobile node;
   construct an intergeneration address from a previous generation home address assigned to the mobile node; and
   create an intergeneration pseudo interface.
13. The article of clause 12, wherein the article contains further code that, when executed, causes the machine to determine if the mobile node has a previous generation home address.
14. The article of clause 13, wherein the article contains further code that, when executed, causes the machine to obtain a previous generation home address.
15. The article of clause 12, wherein the article contains further code that, when executed, causes the machine to perform care-of address registration between the mobile node and home agent in its home network.
16. The article of clause 12, wherein the article contains further code that, when executed, causes the machine to establish a reverse tunnel between the mobile node and a next generation home agent.
17. A mobile device, comprising:
   a communications port to allow the mobile device to communicate with a network;
   a memory to store a previous generation home address; and
   a processor to obtain a previous generation care-of address depending upon the previous generation home address.
18. The device of clause 17, wherein the memory is further to store a predetermined previous generation home address.
19. The device of clause 17, wherein the memory is further to store a previous generation home address after it is obtained through the communications port.
20. The device of clause 17, wherein the processor to obtain a previous generation care-of address is further to:
   construct an intergeneration address from the previous generation address;
   create an intergeneration pseudo-interface;
   establish communication with a mobility agent through the pseudo-interface; and
   obtain a previous generation care-of address from the mobility agent.
21. The device of clause 17, wherein the device comprises one of the group comprised of:
   a cellular phone, a palmtop computer, a notebook computer, and a network appliance.
22. A method for allowing IPv6 mobile nodes to communicate across IPv4 networks, the method comprising:
   discovering IPv4 mobile agents;
   obtaining a IPv4 care-of address for the mobile node;
   constructing a 6to4address from a IPv4 home address assigned to the mobile node; and
   creating a 6to4 pseudo interface.
23. The method of clause 22, wherein the method further comprises determining if the mobile node has an IPv4 home address.
24. The method of clause 23, wherein the method further comprises obtaining an IPv4 home address.
25. The method of clause 22, wherein the method further comprises performing a binding update between the mobile node and an IPv6 home agent in its IPv6 home network.
26. The method of clause22, wherein the method further comprises establishing a reverse tunnel between the mobile node and an IPv6 home agent.
27. The method of clause 22, wherein IPv6 routing optimization is disregarded for the reverse tunnel.
28. A communications system for communicating with a next generation mobile node, the system comprising:
   a mobile agent in communication with the mobile node to provide the mobile node with a previous generation care-of address; and
   an intergeneration network device in communication with the mobile agent to provide the mobile agent with a previous generation home address for the mobile node.
29. The communication system of clause 28, wherein the system further comprises a next generation home agent in communication with the intergeneration network device to provide the mobile node with a next generation home address.

## Claims

1. A communications system for communicating with a next generation mobile node, the system comprising:
a mobile agent in communication with the mobile node to provide the mobile node with a previous generation care-of address; and
an intergeneration network device in communication with the mobile agent to provide the mobile agent with a previous generation home address for the mobile node.

2. The communications system of claim 1, wherein the system further comprises a next generation home agent in communication with the intergeneration network device to provide the mobile node with a next generation home address.

3. The communications system of claim 1, wherein the intergeneration network device comprises a border router.

4. The communications system of claim 1, wherein the intergeneration network device includes an intergeneration pseudo-interface.

5. The communications system of claim 1, wherein the intergeneration network device comprises an IPv6-to-IPv4 router.

6. The communications system of claim 1, wherein the mobile node is a next generation mobile node that has previous generation capability.

7. The communications system of claim 1, wherein the mobile agent comprises a previous generation mobile agent.

8. The communications system of claim 1, wherein the previous generation is IPv4 and the next generation is IPv6.
